# EUROPEAN PATENT SPECIFICATION

(11) **EP 4 381 796 B1**
(45) Date of publication and mention of the grant of the patent: **18.02.2026**
(21) Application number: 22757915.8
(22) Date of filing: 27.07.2022
(51) Int. Cl.: H04W 36/00

(54) **UPDATE OF MN-INITIATED INTER-SN CONDITIONAL PSCELL CHANGE**
AKTUALISIERUNG VON MN-INITIIERTEM INTER-SN-BEDINGTEM PSCELL-WECHSEL
MISE À JOUR D'UN CHANGEMENT DE CELLULE PSCELL CONDITIONNEL INTER-SN INITIÉ PAR MN

(30) Priority: 05.08.2021 IN 202141035356
(43) Date of publication of application: 12.06.2024
(73) Proprietor: Nokia Technologies Oy, 02610 Espoo (FI)
(72) Inventor: SELVAGANAPATHY, Srinivasan, Bangalore-17 Bangalore 560017 (IN); AWADA, Ahmad, 81249 Munich (DE); KORDYBACH, Krzysztof, 51-691 Wroclaw (PL); ELMALI, Ugur Baran, 80639 Munich (DE); STANCZAK, Jedrzej, 50216 Wroclaw (PL)
(74) Representative: Nokia EPO representatives
(86) International application number: PCT/EP2022/071020
(87) International publication number: WO 2023/011999

(56) References cited:
- QUALCOMM INCORPORATED: "CPAC procedures from network perspective", vol. RAN WG2, no. Online; 20210519 - 20210527, 11 May 2021 (2021-05-11), XP052006909, Retrieved from the Internet <URL:https://ftp.3gpp.org/tsg_ran/WG2_RL2/TSGR2_114-e/Docs/R2-2105260.zip R2-2105260.docx> [retrieved on 20210511]
- QUALCOMM INCORPORATED: "CPA and MN initiated Inter-SN CPC procedures: preparation, execution, and data forwarding", vol. RAN WG3, no. E-meeting; 20210517 - 20210528, 7 May 2021 (2021-05-07), XP052002040, Retrieved from the Internet <URL:https://ftp.3gpp.org/tsg_ran/WG3_Iu/TSGR3_112-e/Docs/R3-211757.zip R3-211757.docx> [retrieved on 20210507]

## Description

### TECHNICAL FIELD

The examples and non-limiting embodiments relate generally to communications and, more particularly, to update of MN-initiated inter-SN conditional PSCell change.

### BACKGROUND

It is known to facilitate communications between a user equipment and a base station, to for example implement a handover in a communication network, or to implement dual connectivity in a communication network.

Qualcomm Incorporated: "CPAC procedures from network perspective", R2-2105260, 3rd generation partnership project (3GPP) draft, XP052006909 discloses conditional PSCell addition/change (CPAC) procedures. For example, for MN initiated Inter-SN conditional PSCell change preparation, R2-2105260 proposes that MN forwards in Xn-U Address Indication message to the source SN the data forwarding addresses.

Qualcomm Incorporated: "CPA and MN initiated Inter-SN CPC procedures: preparation, execution and data forwarding", R3-211757, 3GPP draft, XP052002040 discloses that Xn-U Address Indication can be used by MN to forward the data forwarding addresses to source SN.

### SUMMARY

The invention is defined by the subject matter of the independent claims. Some further aspects are defined in the dependent claims.

### BRIEF DESCRIPTION OF THE DRAWINGS

The foregoing aspects and other features are explained in the following description, taken in connection with the accompanying drawings.
FIG. 1 is a block diagram of one possible and non-limiting system in which the example embodiments may be practiced.
FIG. 2 shows notification to the SN about MN initiated CPC.
FIG. 3 shows notification to the MN about the executed intra-SN CPC.
FIG. 4 is an example apparatus configured to implement the examples described herein.
FIG. 5 is an example method performed with an MN to implement the examples described herein.
FIG. 6 is an example method performed with an SN to implement the examples described herein.
FIG. 7 is an example method performed with a UE to implement the examples described herein.

### DETAILED DESCRIPTION OF EXAMPLE EMBODIMENTS

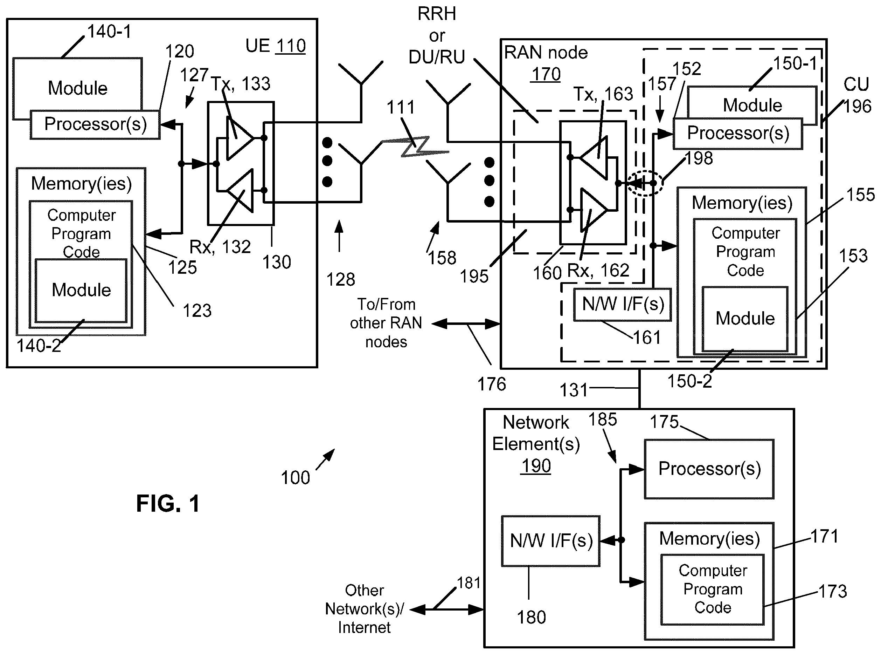

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or an ng-eNB. A gNB is a node providing NR user plane and control plane protocol terminations towards the UE, and connected via the NG interface (such as connection 131) to a 5GC (such as, for example, the network element(s) 190). The ng-eNB is a node providing E-UTRA user plane and control plane protocol terminations towards the UE, and connected via the NG interface (such as connection 131) to the 5GC. The NG-RAN node may include multiple gNBs, which may also include a central unit (CU) (gNB-CU) 196 and distributed unit(s) (DUs) (gNB-DUs), of which DU 195 is shown. Note that the DU 195 may include or be coupled to and control a radio unit (RU). The gNB-CU 196 is a logical node hosting radio resource control (RRC), SDAP and PDCP protocols of the gNB or RRC and PDCP protocols of the en-gNB that control the operation of one or more gNB-DUs. The gNB-CU 196 terminates the F1 interface connected with the gNB-DU 195. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU 195 is a logical node hosting RLC, MAC and PHY layers of the gNB or en-gNB, and its operation is partly controlled by gNB-CU 196. One gNB-CU 196 supports one or multiple cells. One cell may be supported with one gNB-DU 195, or one cell may be supported/shared with multiple DUs under RAN sharing. The gNB-DU 195 terminates the F1 interface 198 connected with the gNB-CU 196. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memory(ies) 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU 195, and the one or more buses 157 could be implemented in part as, for example, fiber optic cable or other suitable network connection to connect the other elements (e.g., a central unit (CU), gNB-CU 196) of the RAN node 170 to the RRH/DU 195. Reference 198 also indicates those suitable network link(s).

It is noted that the description herein indicates that "cells" perform functions, but it should be clear that equipment which forms the cell may perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include location management functions (LMF(s)) and/or access and mobility management function(s) (AMF(S)) and/or user plane functions (UPF(s)) and/or session management function(s) (SMF(s)). Such core network functionality for LTE may include MME (Mobility Management Entity) /SGW (Serving Gateway) functionality. Such core network functionality may include SON (self-organizing/optimizing network) functionality. These are merely example functions that may be supported by the network element (s) 190, and note that both 5G and LTE functions might be supported. The RAN node 170 is coupled via a link 131 to the network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, non-transitory memory, transitory memory, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, network element(s) 190, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, head mounted displays such as those that implement virtual/augmented/mixed reality, as well as portable units or terminals that incorporate combinations of such functions.

UE 110, RAN node 170, and/or network element(s) 190, (and associated memories, computer program code and modules) may be configured to implement (e.g. in part) the methods described herein, including update of MN-initiated inter-SN conditional PSCell change. Thus, computer program code 123, module 140-1, module 140-2, and other elements/features shown in FIG. 1 of UE 110 may implement user equipment related aspects of the methods described herein. Similarly, computer program code 153, module 150-1, module 150-2, and other elements/features shown in FIG. 1 of RAN node 170 may implement gNB/TRP related aspects of the methods described herein. Computer program code 173 and other elements/features shown in FIG. 1 of network element(s) 190 may be configured to implement network element related aspects of the methods described herein.

Having thus introduced a suitable but non-limiting technical context for the practice of the example embodiments, the example embodiments are now described with greater specificity.

The examples described herein relate to cellular radio networks implementation, in particular multi-RAT mobility (MRM).

More specifically, the examples described herein relate to intra-secondary node (SN) conditional primary secondary cell (PSCell) change (CPC). A CPC is a PSCell change that is executed by the UE when one or more execution condition(s) are met. The UE starts evaluating the execution condition(s) upon receiving the CPC configuration, and stops evaluating the execution condition(s) once PSCell change is triggered. In Rel-17, it could happen that the SN and the master node (MN) prepare CPCs independently for the same UE, which requires further coordination among the node to not to cause conflicts and ambiguity. Described herein is a method wherein the MN notifies the SN about the intended MN-initiated CPC when a CPC is prepared. The notification of the actual triggering of MN-initiated CPC is separate from this, which may trigger early data forwarding. Once notified the SN provides in the future the information about the executed PSCell change (both classic or conditional), together with the new secondary cell group (SCG) configuration to the MN.

An intra-SN CPC refers to a CPC executed or configured between the cells of the same node such as a secondary node, where the cells provide a cellular coverage area for a user equipment to be given access to a communication network. An inter-SN CPC refers to a CPC executed or configured between two different secondary nodes, such as between a source secondary node and a target secondary node, and that may be initiated with/by a master node. Similar to the intra-SN case, in the inter-SN case the cells of the two different secondary nodes, such as the cells of the source secondary node and the cells of the target secondary node, provide a cellular coverage area for a user equipment to be given access to a communication network.

If an SN configures a UE for intra-SN CPC, the MN is not aware of the configuration. If then the MN prepares an inter-SN CPC and then the UE executes the intra-SN CPC prepared by the SN, the MN would not be aware that its CPCs became invalid.

To solve this issue, a method as described herein provides for notifying by the MN the SN about the intended MN-initiated CPC when a CPC is prepared. The notification of the actual triggering of MN-initiated CPC is separate from this. The solution further includes providing by the SN, after being notified, the information about the executed PSCell change together with the new secondary cell group (SCG) configuration to the MN.

In Rel.16, 3GPP RAN2 enabled conditional reconfiguration, where the network provides up to 8 RRC reconfigurations with associated conditions. The UE starts evaluating the conditions and once one of them is met, the UE executes the reconfiguration (and deletes others). Once done, the UE informs the network. In Rel.16, this feature was used to enable conditional HO (CHO) and, in case of dual connectivity, intra-SN conditional PSCell change.

In Rel.17, the idea is being developed further to enable CPC fully. This means that besides the existing intra-SN CPC (controlled solely in the secondary node, SN), also inter-SN CPC is to be allowed and it may be initiated by the SN and by the MN. Nonetheless, the solution is built upon the principles of the CPC defined in Rel.16. It has been specified in Rel. 16 that once the UE executes one of the conditional reconfigurations, all other conditional reconfigurations are cancelled in the UE. In Rel.16 this would concern only intra-SN CPC, but the same rule is confirmed for inter-SN CPC in Rel.17.

As long as the CPC could be scheduled by only the SN (and concerned this SN only), there was no need to coordinate the preparations with other nodes. However, in Rel-17, a scenario where the SN and the MN prepare CPCs independently for the same UE has to be considered. In particular, when one of the prepared CPCs is executed, the other node that controlled some other prepared CPCs must be informed as those CPCs have been removed in the UE upon CPC execution.

If the inter-SN CPC is executed first, there is no problem, because the source SN finds it out when the MN releases the source SCG operation. However, if the SN configured a UE for intra-SN CPC, the MN is not aware of the configuration. Then, if the MN prepares an inter-SN CPC and then the UE executes the intra-SN CPC prepared by the SN, the MN would not be aware that its CPCs became invalid (as they have been released by the UE).

A solution to the above situation, as described herein, is that the SN notifies the MN when it receives information from the UE about the completed intra-SN CPC (this is already possible based on the existing signaling that allows the SN to inform the MN about executed intra-SN PSCell change). However, simple notification is not enough: the SN also provides the current (post-CPC) SCG configuration, so that the MN may, if needed, re-prepare its CPCs.

However, to do so, several conditions must be met (i-iii): i) The SN should know about the MN-initiated inter-SN CPC; ii) The MN should know what is the current SCG configuration in the UE; and iii) Coordination should not confuse the UE.

The problem addressed by the examples described herein is how to make sure the above requirements are fulfilled.

Since Rel.15, the SN may inform the MN about SN-initiated PSCell change by including the newly configured PSCell in the MODIFICATION REQUIRED message. Normal handling of the message requires though that the MN forwards to the UE the SCG reconfiguration (via SRB1), if included by the source SN in the MODIFICATION REQUIRED message. Therefore, the SN can either (1) use the same message to reconfigure the UE, or (2) send the message after reconfiguration is done over SRB3, but then it should not include the current configuration (to avoid having it forwarded to the UE again). Also, the feature is optional and normally used only when location tracking is needed for the UE.

At the 3GPP RAN3 #112 meeting, it was agreed that the MN may inform the SN about inter-SN CPC once it is prepared. However, this signaling (details being not defined) is meant to enable early data forwarding from the SN (if it hosts PDCP). Therefore, the MN may not use the feature if PDCP is not hosted in the SN, or if early data forwarding is not needed.

The overall solution defines the following elements (1-2):
1) The notification about MN-initiated CPC is provided to the SN at the moment such CPC is prepared, even when early data forwarding is not needed or not possible (no PDCP in the SN). This means the notification should contain a separate item of information about the triggering of MN-initiated CPC so that it may be sent without triggering data forwarding.
2) Once informed about the MN-initiated CPC, the SN is able to provide the information about executed PSCell change (both, classic or conditional) together with the new SCG configuration, but providing the information about executed PSCell change must be done in such way that the MN does not forward it to the UE (the UE already knows it).

There may be added additional features to enable "survival" of the measurements scheduled by the MN.

In step (1) above, the MN may indicate its preference to re-initialize the inter-SN CPAC after a possible Intra-SN change.

When the SN configures an intra-SN CPC to the UE, based on this preference, the SN instructs the UE to continue with Inter-SN CPAC evaluation after the intra-SN CPC is executed until a defined timer duration. The UE receives the new information via SN RRC signaling for continuing Inter-SN CPAC evaluation. The UE starts a timer on intra-SN cell change execution and awaits for modification to CPAC commands. If not received within the timer duration, the UE releases pending CPAC configurations.

The implementation of the method described herein may be based on the following flags:

### Notification to the SN about MN-initiated CPC

The notification may use an existing procedure (e.g. the MODIFICATION REQUIRED message/procedure with information about prepared inter-SN CPC or the ADDRESS INDICATION message/procedure), or use a new procedure. However, it should be sent always and should contain an additional flag indicating if the early data forwarding is needed or not (alternatively, usage of other IEs, e.g. the TEID addresses, may be defined so that it is clear if the early data forwarding is needed or not).

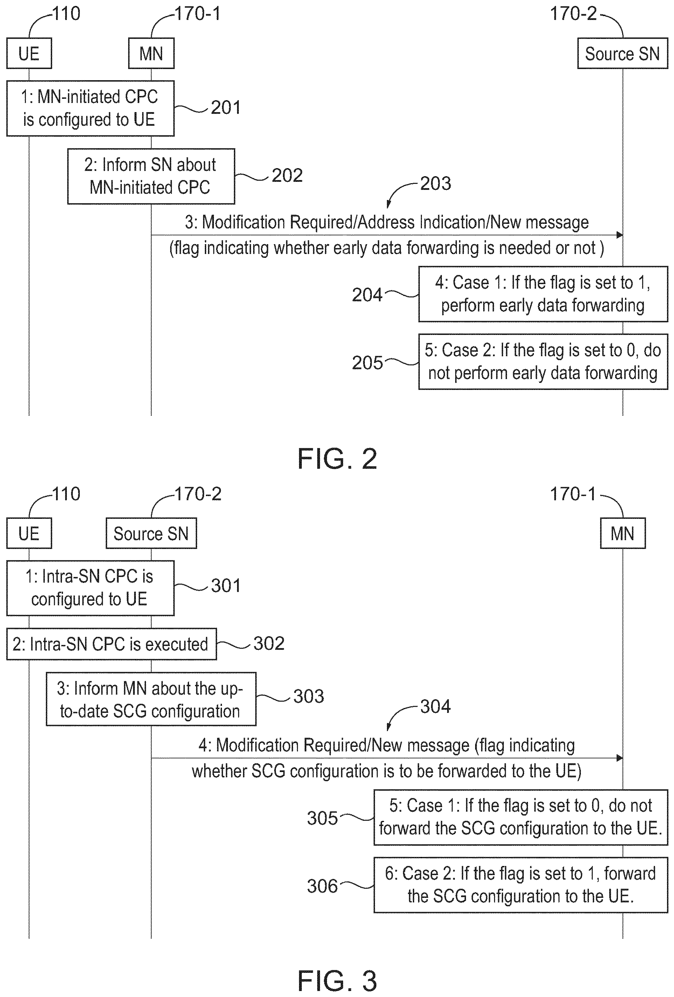

The proposal is illustrated in FIG. 2. FIG. 2 is a signaling diagram showing notification to the SN about MN initiated CPC. At 201, MN-initiated CPC is configured to the UE 110. As an example, MN 170-1 configures the UE 110 for MN-initiated CPC. At 202, the MN 170-1 informs the SN 170-2 about the MN-initiated CPC. For example, at 203, the MN 170-1 provides to the source SN 170-2 a flag indicating whether early data forwarding is needed or not. As shown in FIG. 2 at item 203, notification to the SN 170-2 about MN-initiated CPC may be a modification required message or procedure, an address indication message or procedure, or a new message or procedure. At 204 showing case 1, if the flag is set to one (1), the source SN 170-2 performs early data forwarding. At 205 showing case 2, if the flag is set to zero (0), the source SN 170-2 does not perform early data forwarding.

Also, yet another flag may indicate that the UE 110 ought to be instructed to keep the MN's (170-1) measurements alive in case intra-SN CPC is executed. Instead of a flag, the MN may also provide the time information. If included, the SN should instruct the UE when configuring its intra-SN CPC, not to delete the MN's measurements for a given time duration (pre-defined, or provided explicitly) when the intra-SN CPC is executed.

### Notification to the MN about executed intra-SN CPC

The notification may use an existing MODIFICATION REQUIRED procedure, but the notification should then contain a flag indicating the included SCG configuration is not to be forwarded to the UE. The notification to the MN may also use a new procedure, defined so that the notification enables providing the current SCG configuration, but also so that the MN does not forward the SCG configuration to the UE. The proposal is illustrated in FIG. 3. Herein, as intra-SN CPC has been executed, case 1 would apply.

Accordingly, as shown in FIG. 3, at 301 intra-SN CPC is configured to the UE 110. For example, the source SN 170-2 configures the UE for intra-SN CPC. At 302, intra-SN CPC is executed by the UE 110 and source SN 170-2. At 302, the UE 110 may inform the source SN 170-2 about the completion or execution of the intra-SN CPC. At 303, the source SN 170-2 informs the MN 170-1 about the up-to-date SCG configuration. At 304, for example to implement 303, the source SN 170-2 transmits to the MN 170-1 a flag indicating whether the SCG configuration is to be forwarded to the UE 110. Transmitting the flag at 304 may be performed using a modification required message/procedure or a new message or procedure. At 305 depicting case 1, if the flag is set to zero (0), the MN 170-1 does not forward the SCG configuration to the UE 110. At 306 depicting case 2, if the flag is set to 1, the MN 170-1 forwards the SCG configuration to the UE 110.

There are several advantages and technical effects of the examples described herein. By using the procedure of FIG. 2, the SN is informed about MN-initiated CPC even in the case when no early data forwarding is to be performed. By using the procedure of FIG. 3, the MN is informed about the up-to-date SCG configuration which is not to be forwarded to the UE (and which can be rather used for reconfiguring the inter-SN CPCs).

Further advantages and technical effects of the examples described herein include that the method helps to avoid conflicts between MN initiated inter-SN CPC and SN initiated intra-SN CPC. Thus the examples described herein help to improve mobility robustness in 5G networks.

The examples described herein may be standardized, for example within TS 38.423/36.423, TS 38.300/36.300, or any applicable 3GPP specification.

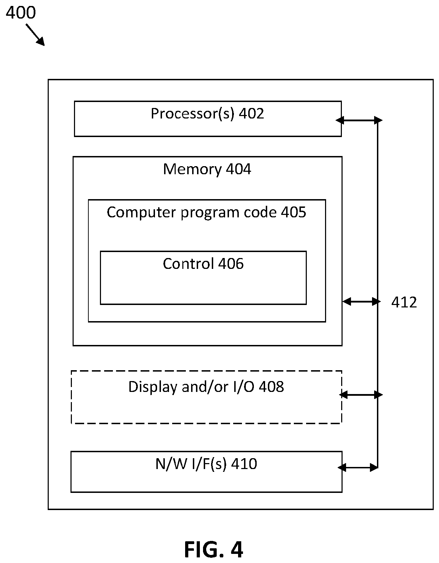

FIG. 4 is an example apparatus 400, which may be implemented in hardware, configured to implement the examples described herein. The apparatus 400 comprises at least one processor 402 (an FPGA and/or CPU), at least one memory 404 including computer program code 405, wherein at least one memory 404 and the computer program code 405 are configured to, with at least one processor 402, cause the apparatus 400 to implement circuitry, a process, component, module, or function (collectively control 406) to implement the examples described herein, including update of MN-initiated inter-SN conditional PSCell change. The memory 404 may be a non-transitory memory, a transitory memory, a volatile memory, or a non-volatile memory.

The apparatus 400 optionally includes a display and/or I/O interface 408 that may be used to display aspects or a status of the methods described herein (e.g., as one of the methods is being performed or at a subsequent time), or to receive input from a user such as with using a keypad. The apparatus 400 includes one or more network (N/W) interfaces (I/F(s)) 410. The N/W I/F(s) 410 may be wired and/or wireless and communicate over the Internet/other network(s) via any communication technique. The N/W I/F(s) 410 may comprise one or more transmitters and one or more receivers. The N/W I/F(s) 410 may comprise standard well-known components such as an amplifier, filter, frequency-converter, (de)modulator, and encoder/decoder circuitries and one or more antennas.

The apparatus 400 to implement the functionality of control 206 may be UE 110, RAN node 170, or network element(s) 190. Thus, processor 402 may correspond respectively to processor(s) 120, processor(s) 152 and/or processor(s) 175, memory 404 may correspond respectively to memory(ies) 125, memory(ies) 155 and/or memory(ies) 171, computer program code 405 may correspond respectively to computer program code 123, module 140-1, module 140-2, and/or computer program code 153, module 150-1, module 150-2, and/or computer program code 173, and N/W I/F(s) 410 may correspond respectively to N/W I/F(s) 161 and/or N/W I/F(s) 180. Alternatively, apparatus 400 may not correspond to either of UE 110, RAN node 170, or network element(s) 190, as apparatus 400 may be part of a self-organizing/optimizing network (SON) node, such as in a cloud. The apparatus 400 may also be distributed throughout the network 100 including within and between apparatus 400 and any network element (such as a network control element (NCE) 190 and/or the RAN node 170 and/or the UE 110).

Interface 412 enables data communication between the various items of apparatus 400, as shown in FIG. 4. For example, the interface 412 may be one or more buses such as address, data, or control buses, and may include any interconnection mechanism, such as a series of lines on a motherboard or integrated circuit, fiber optics or other optical communication equipment, and the like. Computer program code 405, including control 406 may comprise object-oriented software configured to pass data/messages between objects within computer program code 405. The apparatus 400 need not comprise each of the features mentioned, or may comprise other features as well.

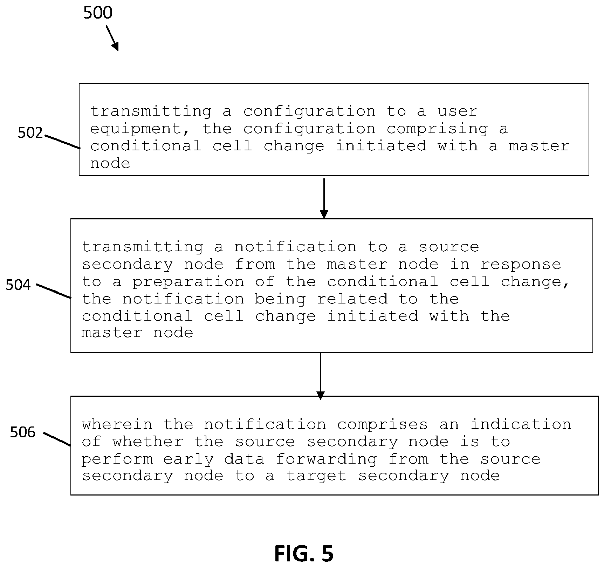

FIG. 5 is an example method 500 to implement the example embodiments described herein. At 502, the method includes transmitting a configuration to a user equipment, the configuration comprising a conditional cell change initiated with a master node. At 504, the method includes transmitting a notification to a source secondary node from the master node in response to a preparation of the conditional cell change, the notification being related to the conditional cell change initiated with the master node. At 506, the method includes wherein the notification comprises an indication of whether the source secondary node is to perform early data forwarding from the source secondary node to a target secondary node. Method 500 may be performed with gNB 170, MN 170-1, apparatus 400, or a combination of those.

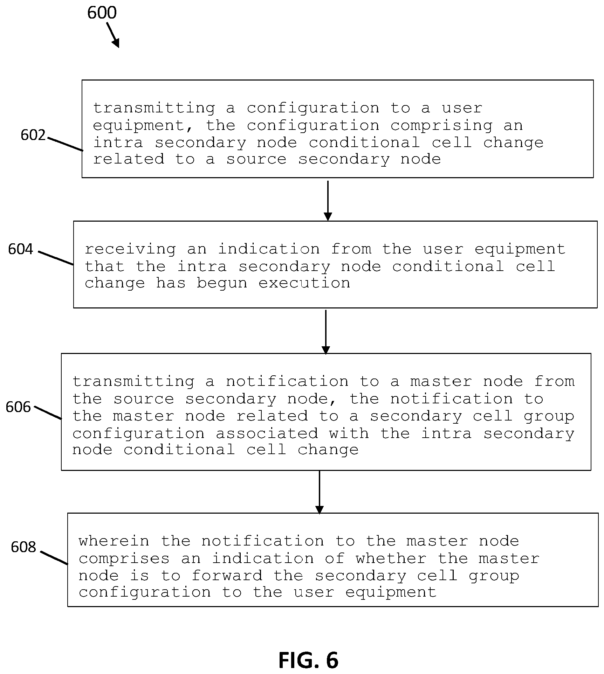

FIG. 6 is an example method 600 to implement the example embodiments described herein. At 602, the method includes transmitting a configuration to a user equipment, the configuration comprising an intra secondary node conditional cell change related to a source secondary node. At 604, the method includes receiving an indication from the user equipment that the intra secondary node conditional cell change has begun execution. At 606, the method includes transmitting a notification to a master node from the source secondary node, the notification to the master node related to a secondary cell group configuration associated with the intra secondary node conditional cell change. At 608, the method includes wherein the notification to the master node comprises an indication of whether the master node is to forward the secondary cell group configuration to the user equipment. Method 600 may be performed with gNB 170, SN 170-2, apparatus 400, or a combination of those.

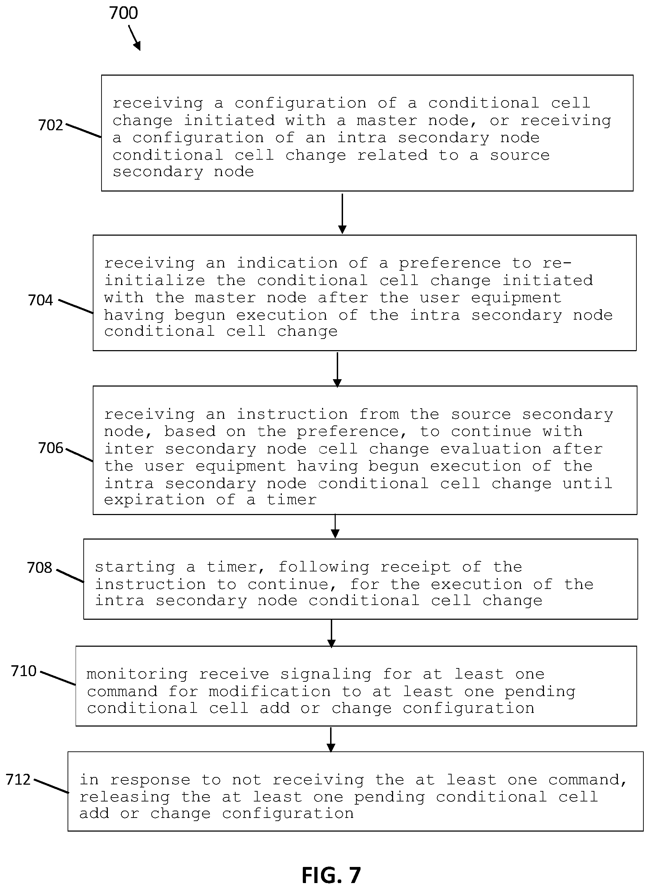

FIG. 7 is an example method 700 to implement the example embodiments described herein. At 702, the method includes receiving a configuration of a conditional cell change initiated with a master node, or receiving a configuration of an intra secondary node conditional cell change related to a source secondary node. At 704, the method includes receiving an indication of a preference to re-initialize the conditional cell change initiated with the master node after the user equipment having begun execution of the intra secondary node conditional cell change. At 706, the method includes receiving an instruction from the source secondary node, based on the preference, to continue with inter secondary node cell change evaluation after the user equipment having begun execution of the intra secondary node conditional cell change until expiration of a timer. At 708, the method includes starting a timer, following receipt of the instruction to continue, for the execution of the intra secondary node conditional cell change. At 710, the method includes monitoring receive signaling for at least one command for modification to at least one pending conditional cell add or change configuration. At 712, the method includes in response to not receiving the at least one command, releasing the at least one pending conditional cell add or change configuration. Method 700 may be performed with UE 110, apparatus 400, or a combination of those.

References to a 'computer', 'processor', etc. should be understood to encompass not only computers having different architectures such as single/multi-processor architectures and sequential or parallel architectures but also specialized circuits such as field-programmable gate arrays (FPGAs), application specific circuits (ASICs), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The memory(ies) as described herein may be implemented using any suitable data storage technology, such as semiconductor based memory devices, flash memory, magnetic memory devices and systems, optical memory devices and systems, non-transitory memory, transitory memory, fixed memory and removable memory. The memory(ies) may comprise a database for storing data.

As used herein, the term 'circuitry' may refer to the following: (a) hardware circuit implementations, such as implementations in analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor (s), that require software or firmware for operation, even if the software or firmware is not physically present. As a further example, as used herein, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An example method includes transmitting a configuration to a user equipment, the configuration comprising a conditional cell change initiated with a master node; and transmitting a notification to a source secondary node from the master node in response to a preparation of the conditional cell change, the notification being related to the conditional cell change initiated with the master node; wherein the notification comprises an indication of whether the source secondary node is to perform early data forwarding from the source secondary node to a target secondary node.

The method may further include wherein the conditional cell change comprises a conditional primary secondary cell change.

The method may further include wherein the notification comprising the indication of whether the source secondary node is to perform early data forwarding is transmitted using at least one of: a modification required procedure or message; an address indication procedure or message; or a new message or procedure.

The method may further include wherein the indication of whether the source secondary node is to perform early data forwarding comprises a presence or absence of a parameter, where presence of the parameter having a first value indicates that early data forwarding is to be performed from the source secondary node to the target secondary node, and where the absence of the parameter or the parameter having a second value indicates that early data forwarding is not to be performed from the source secondary node to the target secondary node.

The method may further include wherein the notification related to the conditional cell change initiated with the master node is transmitted to the source secondary node when the source secondary node is not configured with early data forwarding.

The method may further include wherein the source secondary node is not configured with early data forwarding due to the source secondary node not being configured with a packet data convergence protocol.

The method may further include receiving a notification from the source secondary node related to a secondary cell group configuration following the user equipment having begun execution of an intra secondary node conditional cell change; wherein the notification received from the source secondary node comprises an indication of whether a secondary cell group configuration is to be forwarded from the master node to the user equipment.

The method may further include wherein the notification received from the source secondary node is received with at least one of: a modification required message or procedure; or a new message or procedure.

The method may further include forwarding the secondary cell group configuration to the user equipment or not forwarding the secondary cell group configuration to the user equipment, based on the indication of whether the secondary cell group configuration is to be forwarded from the master node to the user equipment.

The method may further include wherein the indication of whether the secondary cell group configuration is to be forwarded from the master node to the user equipment comprises a presence or absence of a parameter, where presence of the parameter having a first value indicates to the master node that the secondary cell group configuration is to be forwarded from the master node to the user equipment, and where the absence of the parameter or the parameter having a second values indicates to the master node that the secondary cell group configuration is not to be forwarded from the master node to the user equipment.

The method may further include indicating to the user equipment a preference to re-initialize the conditional cell change initiated with the master node after the user equipment having begun execution of an intra secondary node conditional cell change; wherein the source secondary node instructs the user equipment, based on the preference, to continue with inter secondary node cell change evaluation after the user equipment having begun execution of the intra secondary node conditional cell change until expiration of a timer; and wherein, following receipt of the instruction to continue, the user equipment starts a timer for the execution of the intra secondary node conditional cell change, and the user equipment monitors receive signaling for at least one command for modification to at least one pending conditional cell add or change configuration, and in response to not receiving the at least one command, the user equipment releases the at least one pending conditional cell add or change configuration.

An example method includes transmitting a configuration to a user equipment, the configuration comprising an intra secondary node conditional cell change related to a source secondary node; receiving an indication from the user equipment that the intra secondary node conditional cell change has begun execution; and transmitting a notification to a master node from the source secondary node, the notification to the master node related to a secondary cell group configuration associated with the intra secondary node conditional cell change; wherein the notification to the master node comprises an indication of whether the master node is to forward the secondary cell group configuration to the user equipment.

The method may further include wherein the intra secondary node conditional cell change comprises a conditional primary secondary cell change.

The method may further include wherein the notification comprising the indication of whether the master node is to forward the secondary cell group configuration to the user equipment is transmitted using at least one of: a modification required procedure or message; or a new message or procedure.

The method may further include wherein the indication of whether the master node is to forward the secondary cell group configuration to the user equipment comprises a presence or absence of a parameter, where presence of the parameter having a first value indicates that the master node is to forward the secondary cell group configuration to the user equipment, and where absence of the parameter or the parameter having a second value indicates that the master node is to not forward the secondary cell group configuration to the user equipment.

The method may further include receiving a notification from the master node related to a conditional cell change initiated with the master node when the source secondary node is not configured with early data forwarding.

The method may further include wherein the source secondary node is not configured with early data forwarding due to the source secondary node not being configured with a packet data convergence protocol.

The method may further include receiving a notification from the master node related to a conditional cell change initiated with the master node; wherein the notification received from the master node comprises an indication of whether the source secondary node is to perform early data forwarding from the source secondary node to a target secondary node.

The method may further include wherein the notification received from the master node is received with at least one of: a modification required procedure or message; an address indication procedure or message; or a new message or procedure.

The method may further include performing early data forwarding or not performing early data forwarding, based on the indication of whether the source secondary node is to perform early data forwarding.

The method may further include wherein the indication of whether the source secondary node is to perform early data forwarding comprises a presence or absence of a parameter, where presence of the parameter having a first value indicates to the source secondary node to perform early data forwarding, and where absence of the parameter or the parameter having a second value indicates to the source secondary node to not perform early data forwarding.

The method may further include wherein the master node has indicated to the user equipment a preference to re-initialize a conditional cell change initiated with the master node after the user equipment having begun execution of the intra secondary node conditional cell change; instructing the user equipment, based on the preference, to continue with inter secondary node cell change evaluation after the user equipment having begun execution of the intra secondary node conditional cell change until expiration of a timer; and wherein, following receipt of the instruction to continue, the user equipment starts a timer for the execution of the intra secondary node conditional cell change, and the user equipment monitors receive signaling for at least one command for modification to at least one pending conditional cell add or change configuration, and in response to not receiving the at least one command, the user equipment releases the at least one pending conditional cell add or change configuration.

An example method includes receiving a configuration of a conditional cell change initiated with a master node, or receiving a configuration of an intra secondary node conditional cell change related to a source secondary node; receiving an indication of a preference to re-initialize the conditional cell change initiated with the master node after the user equipment having begun execution of the intra secondary node conditional cell change; receiving an instruction from the source secondary node, based on the preference, to continue with inter secondary node cell change evaluation after the user equipment having begun execution of the intra secondary node conditional cell change until expiration of a timer; starting a timer, following receipt of the instruction to continue, for the execution of the intra secondary node conditional cell change; monitoring receive signaling for at least one command for modification to at least one pending conditional cell add or change configuration; and in response to not receiving the at least one command, releasing the at least one pending conditional cell add or change configuration.

The method may further include wherein: the conditional cell change comprises a conditional primary secondary cell change; and the intra secondary node conditional cell change comprises an intra secondary node conditional primary secondary cell change.

The method may further include wherein: a notification comprising an indication of whether the source secondary node is to perform early data forwarding from the source secondary node to a target secondary node is transmitted to the source secondary node from the master node using at least one of a first modification required procedure or message, a first address indication procedure or message, or a first new message or procedure; and a notification comprising an indication of whether the master node is to forward a secondary cell group configuration to the user equipment is transmitted to the master node from the source secondary node using at least one of a second modification required procedure or message, or a second new message or procedure.

The method may further include wherein: an indication of whether the source secondary node is to perform early data forwarding from the source secondary node to a target secondary node transmitted from the master node to the source secondary node comprises a presence or absence of a parameter, where presence of the parameter having a first value indicates that early data forwarding is to be performed from the source secondary node to a target secondary node, and where absence of the parameter or the parameter having a second value indicates that early data forwarding is not to be performed from the source secondary node to the target secondary node; and an indication of whether the master node is to forward a secondary cell group configuration to the user equipment transmitted from the source secondary node to the master node comprises a presence or absence of a parameter, where presence of the parameter having a first value indicates that the master node is to forward the secondary cell group configuration to the user equipment, and where absence of the parameter or the parameter having a second value indicates that the master node is to not forward the secondary cell group configuration to the user equipment.

The method may further include wherein a notification related to the conditional cell change initiated with the master node is transmitted to the source secondary node from the master node when the source secondary node is not configured with early data forwarding.

The method may further include wherein the source secondary node is not configured with early data forwarding due to the source secondary node not being configured with a packet data convergence protocol.

The method may further include wherein: a notification is received with the master node from the source secondary node, the notification received from the source secondary node being related to a secondary cell group configuration following the user equipment having begun execution of the intra secondary node conditional cell change; the notification received from the source secondary node comprises an indication of whether a secondary cell group configuration is to be forwarded from the master node to the user equipment; a notification is received with the source secondary node from the master node related to the conditional cell change initiated with the master node; and the notification received from the master node comprises an indication of whether the source secondary node is to perform early data forwarding from the source secondary node to a target secondary node.

The method may further include wherein: the notification received from the source secondary node is received with at least one of: a first modification required message or procedure, or a first new message or procedure; and the notification received from the master node is received with at least one of: a second modification required procedure or message, an address indication procedure or message, or a second new message or procedure.

The method may further include wherein: the secondary cell group configuration is forwarded from the master node to the user equipment, or the secondary cell group configuration is not forwarded from the master node to the user equipment, based on the indication of whether the secondary cell group configuration is to be forwarded from the master node to the user equipment; and early data forwarding is performed from the source secondary node to the target secondary node or early data forwarding is not performed from the source secondary node to the target secondary node, based on the indication of whether the source secondary node is to perform early data forwarding to the target secondary node.

The method may further include wherein: the indication of whether the secondary cell group configuration is to be forwarded from the master node to the user equipment comprises a presence or absence of a parameter, where presence of the parameter having a first value indicates to the master node that the secondary cell group configuration is to be forwarded from the master node to the user equipment, and where absence of the parameter or the parameter having a second value indicates to the master node that the secondary cell group configuration is not to be forwarded from the master node to the user equipment; and the indication of whether the source secondary node is to perform early data forwarding comprises a presence or absence of a parameter, where presence of the parameter having a first value indicates to the source secondary node to perform early data forwarding to the target secondary node, and where absence of the parameter or the parameter having a second value indicates to the source secondary node to not perform early data forwarding to the target secondary node.

The method may further include executing a handover from the source secondary node to a target secondary node.

An example apparatus includes at least one processor; and at least one memory including computer program code; wherein the at least one memory and the computer program code are configured to, with the at least one processor, cause the apparatus at least to: transmit a configuration to a user equipment, the configuration comprising a conditional cell change initiated with a master node; and transmit a notification to a source secondary node from the master node in response to a preparation of the conditional cell change, the notification being related to the conditional cell change initiated with the master node; wherein the notification comprises an indication of whether the source secondary node is to perform early data forwarding from the source secondary node to a target secondary node.

An example apparatus includes at least one processor; and at least one memory including computer program code; wherein the at least one memory and the computer program code are configured to, with the at least one processor, cause the apparatus at least to: transmit a configuration to a user equipment, the configuration comprising an intra secondary node conditional cell change related to a source secondary node; receive an indication from the user equipment that the intra secondary node conditional cell change has begun execution; and transmit a notification to a master node from the source secondary node, the notification to the master node related to a secondary cell group configuration associated with the intra secondary node conditional cell change; wherein the notification to the master node comprises an indication of whether the master node is to forward the secondary cell group configuration to the user equipment.

An example apparatus includes at least one processor; and at least one memory including computer program code; wherein the at least one memory and the computer program code are configured to, with the at least one processor, cause the apparatus at least to: receive a configuration of a conditional cell change initiated with a master node, or receive a configuration of an intra secondary node conditional cell change related to a source secondary node; receive an indication of a preference to re-initialize the conditional cell change initiated with the master node after the user equipment having begun execution of the intra secondary node conditional cell change; receive an instruction from the source secondary node, based on the preference, to continue with inter secondary node cell change evaluation after the user equipment having begun execution of the intra secondary node conditional cell change until expiration of a timer; start a timer, following receipt of the instruction to continue, for the execution of the intra secondary node conditional cell change; monitor receive signaling for at least one command for modification to at least one pending conditional cell add or change configuration; and in response to not receiving the at least one command, release the at least one pending conditional cell add or change configuration.

An example apparatus means for transmitting a configuration to a user equipment, the configuration comprising a conditional cell change initiated with a master node; and means for transmitting a notification to a source secondary node from the master node in response to a preparation of the conditional cell change, the notification being related to the conditional cell change initiated with the master node; wherein the notification comprises an indication of whether the source secondary node is to perform early data forwarding from the source secondary node to a target secondary node.

An example apparatus includes means for transmitting a configuration to a user equipment, the configuration comprising an intra secondary node conditional cell change related to a source secondary node; means for receiving an indication from the user equipment that the intra secondary node conditional cell change has begun execution; and means for transmitting a notification to a master node from the source secondary node, the notification to the master node related to a secondary cell group configuration associated with the intra secondary node conditional cell change; wherein the notification to the master node comprises an indication of whether the master node is to forward the secondary cell group configuration to the user equipment.

An example apparatus includes means for receiving a configuration of a conditional cell change initiated with a master node, or receiving a configuration of an intra secondary node conditional cell change related to a source secondary node; means for receiving an indication of a preference to re-initialize the conditional cell change initiated with the master node after the user equipment having begun execution of the intra secondary node conditional cell change; means for receiving an instruction from the source secondary node, based on the preference, to continue with inter secondary node cell change evaluation after the user equipment having begun execution of the intra secondary node conditional cell change until expiration of a timer; means for starting a timer, following receipt of the instruction to continue, for the execution of the intra secondary node conditional cell change; means for monitoring receive signaling for at least one command for modification to at least one pending conditional cell add or change configuration; and means for, in response to not receiving the at least one command, releasing the at least one pending conditional cell add or change configuration.

An example non-transitory program storage device readable by a machine, tangibly embodying a program of instructions executable with the machine for performing operations is provided, the operations comprising: transmitting a configuration to a user equipment, the configuration comprising a conditional cell change initiated with a master node; and transmitting a notification to a source secondary node from the master node in response to a preparation of the conditional cell change, the notification being related to the conditional cell change initiated with the master node; wherein the notification comprises an indication of whether the source secondary node is to perform early data forwarding from the source secondary node to a target secondary node.

An example non-transitory program storage device readable by a machine, tangibly embodying a program of instructions executable with the machine for performing operations is provided, the operations comprising: transmitting a configuration to a user equipment, the configuration comprising an intra secondary node conditional cell change related to a source secondary node; receiving an indication from the user equipment that the intra secondary node conditional cell change has begun execution; and transmitting a notification to a master node from the source secondary node, the notification to the master node related to a secondary cell group configuration associated with the intra secondary node conditional cell change; wherein the notification to the master node comprises an indication of whether the master node is to forward the secondary cell group configuration to the user equipment.

An example non-transitory program storage device readable by a machine, tangibly embodying a program of instructions executable with the machine for performing operations is provided, the operations comprising: receiving a configuration of a conditional cell change initiated with a master node, or receiving a configuration of an intra secondary node conditional cell change related to a source secondary node; receiving an indication of a preference to re-initialize the conditional cell change initiated with the master node after the user equipment having begun execution of the intra secondary node conditional cell change; receiving an instruction from the source secondary node, based on the preference, to continue with inter secondary node cell change evaluation after the user equipment having begun execution of the intra secondary node conditional cell change until expiration of a timer; starting a timer, following receipt of the instruction to continue, for the execution of the intra secondary node conditional cell change; monitoring receive signaling for at least one command for modification to at least one pending conditional cell add or change configuration; and in response to not receiving the at least one command, releasing the at least one pending conditional cell add or change configuration.

It should be understood that the foregoing description is only illustrative. Various alternatives and modifications may be devised by those skilled in the art. For example, features recited in the various dependent claims could be combined with each other in any suitable combination(s). In addition, features from different embodiments described above could be selectively combined into a new embodiment. Accordingly, this description is intended to embrace all such alternatives, modifications and variances which fall within the scope of the appended claims.

When a reference number as used herein is of the form y-x, this means that the referred to item is an instantiation of (or type of) reference number y. For example, MN 170-1 and source SN 170-2 in FIG. 2 and FIG. 3 are instantiations of (e.g. a first and second instantiation) of the gNB 170 shown in FIG. 1.

The following acronyms and abbreviations that may be found in the specification and/or the drawing figures are defined as follows:
- 3GPP: third generation partnership project
- 4G: fourth generation
- 5G: fifth generation
- 5GC: 5G core network
- AMF: access and mobility management function
- ASIC: application-specific integrated circuit
- CHO: conditional handover
- CPAC: conditional PSCell addition/change
- CPC: conditional PSCell change
- CPU: central processing unit
- CU: central unit or centralized unit
- DC: dual connectivity
- DCCH: dedicated control channel
- DSP: digital signal processor
- DU: distributed unit
- eNB: evolved Node B (e.g., an LTE base station)
- EN-DC: E-UTRA-NR dual connectivity
- en-gNB: node providing NR user plane and control plane protocol terminations towards the UE, and acting as a secondary node in EN-DC
- E-UTRA: evolved universal terrestrial radio access, i.e., the LTE radio access technology
- F1: control interface between the CU and the DU
- FPGA: field-programmable gate array
- gNB: base station for 5G/NR, i.e., a node providing NR user plane and control plane protocol terminations towards the UE, and connected via the NG interface to the 5GC
- HO: handover
- IE: information element
- I/F: interface
- I/O: input/output
- LMF: location management function
- LTE: long term evolution (4G)
- MAC: medium access control
- MME: mobility management entity
- MN: master node, e.g. MgNB or MeNB
- MRM: multi-RAT mobility
- NAS: non-access stratum
- NCE: network control element
- ng or NG: new generation
- ng-eNB: new generation eNB
- NG-RAN: new generation radio access network
- NR: new radio (5G)
- N/W: network
- PSCell: primary secondary cell
- PDA: personal digital assistant
- PDCP: packet data convergence protocol
- PHY: physical layer
- RAN: radio access network
- RAN2: RAN WG2
- RAN3: RAN WG3
- Rel: release
- RLC: radio link control
- RRC: radio resource control (protocol)
- RRH: remote radio head
- RU: radio unit
- Rx: receiver or reception
- SCG: secondary cell group
- SGW: serving gateway
- SN: secondary node, e.g. an en-gNB.
- SON: self-organizing/optimizing network
- SRB1: signaling radio bearer (for RRC messages (which may include a NAS message) as well as for NAS messages prior to the establishment of SRB2, using a DCCH logical channel).
- SRB2: signaling radio bearer (for NAS messages using a DCCH logical channel), where SRB2 has a lower priority than SRB1 and is configured by the network after security activation
- SRB3: signaling radio bearer (for specific RRC messages when the UE is in EN-DC, using a DCCH logical channel)
- TEID: tunnel endpoint identifier
- TRP: transmission and/or reception point
- TS: technical specification
- Tx: transmitter or transmission
- UE: user equipment (e.g., a wireless, typically mobile device)
- UPF: user plane function
- WG: working group
- X2: network interface between RAN nodes and between RAN and the core network
- Xn: network interface between NG-RAN nodes

## Claims

1. A method (500) comprising:
transmitting (502), by a master node (170-1), a configuration to a user equipment (110), the configuration comprising a conditional cell change initiated with the master node; and
transmitting (504), by the master node, a notification to a source secondary node (170-2) in response to a preparation of the conditional cell change, the notification being related to the conditional cell change initiated with the master node;
wherein (506) the notification comprises an indication of whether the source secondary node (170-2) is to perform early data forwarding from the source secondary node to a target secondary node, wherein the indication of whether the source secondary node is to perform early data forwarding comprises a presence or absence of a parameter, where presence of the parameter having a first value indicates that early data forwarding is to be performed from the source secondary node to the target secondary node, and where the absence of the parameter or the parameter having a second value indicates that early data forwarding is not to be performed from the source secondary node to the target secondary node.

2. The method (500) of claim 1, wherein the conditional cell change comprises a conditional primary secondary cell change.

3. The method (500) of any one of claims 1 to 2, wherein the notification comprising the indication of whether the source secondary node is to perform early data forwarding is transmitted using at least one of:
a modification required procedure or message;
an address indication procedure or message; or
a new message or procedure.

4. The method (500) of any one of claims 1 to 3, wherein the notification related to the conditional cell change initiated with the master node is transmitted to the source secondary node when the source secondary node is not configured with early data forwarding.

5. The method (500) of claim 4, wherein the source secondary node is not configured with early data forwarding due to the source secondary node not being configured with a packet data convergence protocol.

6. The method (500) of any one of claims 1 to 5, further comprising:
receiving, by the master node, a notification from the source secondary node related to a secondary cell group configuration following the user equipment having begun execution of an intra secondary node conditional cell change;
wherein the notification received from the source secondary node comprises an indication of whether a secondary cell group configuration is to be forwarded from the master node to the user equipment.

7. The method (500) of claim 6, wherein the notification received from the source secondary node is received with at least one of:
a modification required message or procedure; or
a new message or procedure.

8. The method (500) of any one of claims 6 to 7, further comprising:
forwarding, by the master node, the secondary cell group configuration to the user equipment or not forwarding the secondary cell group configuration to the user equipment, based on the indication of whether the secondary cell group configuration is to be forwarded from the master node to the user equipment.

9. The method (500) of any one of claims 6 to 8, wherein the indication of whether the secondary cell group configuration is to be forwarded from the master node to the user equipment comprises a presence or absence of a parameter, where presence of the parameter having a first value indicates to the master node that the secondary cell group configuration is to be forwarded from the master node to the user equipment, and where the absence of the parameter or the parameter having a second values indicates to the master node that the secondary cell group configuration is not to be forwarded from the master node to the user equipment.

10. The method (500) of any one of claims 1 to 9, further comprising:
indicating, by the master node, to the user equipment a preference to re-initialize the conditional cell change initiated with the master node after the user equipment having begun execution of an intra secondary node conditional cell change;
wherein the source secondary node instructs the user equipment, based on the preference, to continue with inter secondary node cell change evaluation after the user equipment having begun execution of the intra secondary node conditional cell change until expiration of a timer; and
wherein, following receipt of the instruction to continue, the user equipment starts a timer for the execution of the intra secondary node conditional cell change, and the user equipment monitors receive signaling for at least one command for modification to at least one pending conditional cell add or change configuration, and in response to not receiving the at least one command, the user equipment releases the at least one pending conditional cell add or change configuration.

11. A master node (170-1), comprising:
at least one processor; and
at least one memory including computer program code;
wherein the at least one memory and the computer program code are configured to, with the at least one processor, cause the master node at least to:
transmit a configuration to a user equipment (110), the configuration comprising a conditional cell change initiated with the master node; and
transmit a notification to a source secondary node (170-2) from the master node in response to a preparation of the conditional cell change, the notification being related to the conditional cell change initiated with the master node;
wherein the notification comprises an indication of whether the source secondary node is to perform early data forwarding from the source secondary node to a target secondary node, wherein the indication of whether the source secondary node is to perform early data forwarding comprises a presence or absence of a parameter, where presence of the parameter having a first value indicates that early data forwarding is to be performed from the source secondary node to the target secondary node, and where the absence of the parameter or the parameter having a second value indicates that early data forwarding is not to be performed from the source secondary node to the target secondary node.

12. A computer program product comprising program instructions which, when the program is executed by a master node (170-1), cause the master node to perform:
transmitting (502) a configuration to a user equipment, the configuration comprising a conditional cell change initiated with a master node; and
transmitting (504) a notification to a source secondary node from the master node in response to a preparation of the conditional cell change, the notification being related to the conditional cell change initiated with the master node;
wherein (506) the notification comprises an indication of whether the source secondary node is to perform early data forwarding from the source secondary node to a target secondary node, wherein the indication of whether the source secondary node is to perform early data forwarding comprises a presence or absence of a parameter, where presence of the parameter having a first value indicates that early data forwarding is to be performed from the source secondary node to the target secondary node, and where the absence of the parameter or the parameter having a second value indicates that early data forwarding is not to be performed from the source secondary node to the target secondary node.

## Patentansprüche

1. Verfahren (500), das Folgendes umfasst:
Übertragen (502) einer Auslegung durch einen Masterknoten (170-1) zu einer Teilnehmereinrichtung (110), wobei die Auslegung eine bedingte Zelländerun/g umfasst, die mit dem Masterknoten initiiert wird; und
Übertragen (504) einer Benachrichtigung durch den Masterknoten zu einem Quellsekundärknoten (170-2) in Reaktion auf eine Vorbereitung der bedingten Zelländerung, wobei sich die Benachrichtigung auf die bedingte Zelländerung bezieht, die mit dem Masterknoten initiiert wird;
wobei (506) die Benachrichtigung eine Anzeige dazu umfasst, ob der Quellsekundärknoten (170-2) eine frühe Datenweiterleitung vom Quellsekundärknoten zu einem Zielsekundärknoten durchführen soll, wobei die Anzeige dazu, ob der Quellsekundärknoten eine frühe Datenweiterleitung durchführen soll, ein Vorhandensein oder ein Fehlen eines Parameters umfasst, wo das Vorhandensein des Parameters, der einen ersten Wert aufweist, anzeigt, dass eine frühe Datenweiterleitung vom Quellsekundärknoten zum Zielsekundärknoten durchzuführen ist, und wo das Fehlen des Parameters oder des Parameters, der einen zweiten Wert aufweist, anzeigt, dass eine frühe Datenweiterleitung vom Quellsekundärknoten zum Zielsekundärknoten nicht durchzuführen ist.

2. Verfahren (500) nach Anspruch 1, wobei die bedingte Zelländerung eine bedingte primäre sekundäre Zelländerung umfasst.

3. Verfahren (500) nach einem der Ansprüche 1 bis 2, wobei die Benachrichtigung, die die Anzeige dazu umfasst, ob der Quellsekundärknoten eine frühe Datenweiterleitung durchführen soll, unter Verwendung von mindestens einem von Folgendem übertragen wird:
einer Prozedur oder einer Nachricht zu einer erforderlichen Modifikation;
einer Prozedur oder einer Nachricht zu einer Adressanzeige oder
einer neuen Nachricht oder Prozedur.

4. Verfahren (500) nach einem der Ansprüche 1 bis 3, wobei die Benachrichtigung, die sich auf die bedingte Zelländerung bezieht, die mit dem Masterknoten initiiert wird, zum Zielsekundärknoten übertragen wird, wenn der Quellsekundärknoten nicht mit einer frühen Datenweiterleitung ausgelegt ist.

5. Verfahren (500) nach Anspruche 4, wobei der Quellsekundärknoten deshalb nicht mit einer frühen Datenweiterleitung ausgelegt ist, weil der Quellsekundärknoten nicht mit einem Paketdatenkonvergenzprotokoll ausgelegt ist.

6. Verfahren (500) nach einem der Ansprüche 1 bis 5, das ferner Folgendes umfasst:
Empfangen einer Benachrichtigung durch den Masterknoten vom Quellsekundärknoten, die sich auf eine Auslegung einer Sekundärzellgruppe bezieht, nachdem die Teilnehmereinrichtung mit einer Ausführung einer bedingten Zelländerung in einem Sekundärknoten begonnen hat;
wobei die Benachrichtigung, die vom Quellsekundärknoten empfangen wird, eine Anzeige dazu umfasst, ob eine Auslegung einer Sekundärzellgruppe vom Masterknoten zur Teilnehmereinrichtung weiterzuleiten ist.

7. Verfahren (500) nach Anspruch 6, wobei die Benachrichtigung, die vom Quellsekundärknoten empfangen wird, mit mindestens einem von Folgendem empfangen wird:
einer Nachricht oder einer Prozedur zu einer erforderlichen Modifikation oder
einer neuen Nachricht oder Prozedur.

8. Verfahren (500) nach einem der Ansprüche 6 bis 7, das ferner Folgendes umfasst:
Weiterleiten der Auslegung der Sekundärzellgruppe durch den Masterknoten zur Teilnehmereinrichtung oder Unterlassen des Weiterleitens der Auslegung der Sekundärzellgruppe zur Teilnehmereinrichtung auf Basis der Anzeige dazu, ob die Auslegung der Sekundärzellgruppe vom Masterknoten zur Teilnehmereinrichtung weiterzuleiten ist.

9. Verfahren (500) nach einem der Ansprüche 6 bis 8, wobei die Anzeige dazu, ob die Auslegung der Sekundärzellgruppe vom Masterknoten zur Teilnehmereinrichtung weiterzuleiten ist, ein Vorhandensein oder ein Fehlen eines Parameters umfasst, wo ein Vorhandensein des Parameters, der einen ersten Wert aufweist, dem Masterknoten anzeigt, dass die Auslegung der Sekundärzellgruppe vom Masterknoten zur Teilnehmereinrichtung weiterzuleiten ist, und wo das Fehlen des Parameters oder des Parameters, der einen zweiten Wert aufweist, dem Masterknoten anzeigt, dass die Auslegung der Sekundärzellgruppe vom Masterknoten nicht zur Teilnehmereinrichtung weiterzuleiten ist.

10. Verfahren (500) nach einem der Ansprüche 1 bis 9, das ferner Folgendes umfasst:
Anzeigen einer Präferenz zum erneuten Initialisieren der bedingten Zelländerung, die mit dem Masterknoten initiiert wird, nachdem die Teilnehmereinrichtung mit einer Ausführung einer bedingten Zelländerung in einem Sekundärknoten begonnen hat, durch den Masterknoten für die Teilnehmereinrichtung;
wobei der Quellsekundärknoten die Teilnehmereinrichtung auf Basis der Präferenz anweist, mit einer Beurteilung einer Zelländerung zwischen Sekundärknoten, nachdem die Teilnehmereinrichtung mit einer Ausführung einer bedingten Zelländerung in einem Sekundärknoten begonnen hat, bis zum Ablauf eines Timers fortzufahren; und
wobei nach dem Empfang der Anweisung, fortzufahren, die Teilnehmereinrichtung einen Timer für die Ausführung der bedingten Zelländerung im Sekundärknoten startet und die Teilnehmereinrichtung eine Empfangssignalisierung für mindestens einen Befehl zur Modifikation an mindestens einer bedingten Auslegung zum ausstehenden Hinzufügen oder Ändern einer Zelle überwacht und in Reaktion darauf, dass der mindestens eine Befehl nicht empfangen wird, die Teilnehmereinrichtung die mindestens eine bedingte Auslegung zum ausstehenden Hinzufügen oder Ändern freigibt.

11. Masterknoten (170-1), der Folgendes umfasst:
mindestens einen Prozessor und
mindestens einen Speicher, der Computerprogrammcode beinhaltet;
wobei der mindestens eine Speicher und der Computerprogrammcode dazu ausgelegt sind, den Masterknoten mit dem mindestens einen Prozessor mindestens zu Folgendem zu veranlassen:
Übertragen einer Auslegung zu einer Teilnehmereinrichtung (110), wobei die Auslegung eine bedingte Zelländerung umfasst, die mit dem Masterknoten initiiert wird; und
Übertragen einer Benachrichtigung vom Masterknoten zu einem Quellsekundärknoten (170-2) in Reaktion auf eine Vorbereitung der bedingten Zelländerung, wobei sich die Benachrichtigung auf die bedingte Zelländerung bezieht, die mit dem Masterknoten initiiert wird;
wobei die Benachrichtigung eine Anzeige dazu umfasst, ob der Quellsekundärknoten eine frühe Datenweiterleitung vom Quellsekundärknoten zu einem Zielsekundärknoten durchzuführen ist, wobei die Anzeige dazu, ob der Quellsekundärknoten eine frühe Datenweiterleitung durchführen soll, ein Vorhandensein oder ein Fehlen eines Parameters umfasst, wo das Vorhandensein des Parameters, der einen ersten Wert aufweist, anzeigt, dass eine frühe Datenweiterleitung vom Quellsekundärknoten zum Zielsekundärknoten durchzuführen ist, und wo das Fehlen des Parameters oder des Parameters, der einen zweiten Wert aufweist, anzeigt, dass eine frühe Datenweiterleitung vom Quellsekundärknoten zum Zielsekundärknoten nicht durchzuführen ist.

12. Computerprogrammprodukt, das Programmanweisungen umfasst, die, wenn das Programm von einem Masterknoten (170-1) ausgeführt wird, den Masterknoten veranlassen, Folgendes durchzuführen:
Übertragen (502) einer Auslegung zu einer Teilnehmereinrichtung, wobei die Auslegung eine bedingte Zelländerung umfasst, die mit einem Masterknoten initiiert wird; und
Übertragen (504) einer Benachrichtigung vom Masterknoten zu einem Quellsekundärknoten in Reaktion auf eine Vorbereitung der bedingten Zelländerung, wobei sich die Benachrichtigung auf die bedingte Zelländerung bezieht, die mit dem Masterknoten initiiert wird;
wobei (506) die Benachrichtigung eine Anzeige dazu umfasst, ob eine frühe Datenweiterleitung vom Quellsekundärknoten zu einem Zielsekundärknoten durchzuführen ist, wobei die Anzeige dazu, ob der Quellsekundärknoten eine frühe Datenweiterleitung durchführen soll, ein Vorhandensein oder ein Fehlen eines Parameters umfasst, wo das Vorhandensein des Parameters, der einen ersten Wert aufweist, anzeigt, dass eine frühe Datenweiterleitung vom Quellsekundärknoten zum Zielsekundärknoten durchzuführen ist, und wo das Fehlen des Parameters oder des Parameters, der einen zweiten Wert aufweist, anzeigt, dass eine frühe Datenweiterleitung vom Quellsekundärknoten zum Zielsekundärknoten nicht durchzuführen ist.

## Revendications

1. Procédé (500) comprenant les étapes suivantes :
transmettre (502) par un nœud instructeur (170-1) une configuration à un équipement utilisateur (110), la configuration comprenant un changement de cellule conditionnel initié à l'aide du nœud instructeur ; et
transmettre (504) par le nœud instructeur une notification à un nœud secondaire source (170-2) en réponse à une préparation du changement de cellule conditionnel, la notification étant liée au changement de cellule conditionnel initié à l'aide du nœud instructeur ;
dans lequel (506) la notification comprend une indication précisant si le nœud secondaire source (170-2) doit effectuer un transfert de données anticipé du nœud secondaire source à un nœud secondaire cible, dans lequel l'indication précisant si le nœud secondaire source doit effectuer un transfert de données anticipé comprend la présence ou l'absence d'un paramètre, où la présence du paramètre ayant une première valeur indique qu'un transfert de données anticipé doit être effectué du nœud secondaire source au nœud secondaire cible, et où l'absence du paramètre ou le paramètre ayant une deuxième valeur indique qu'un transfert de données anticipé ne doit pas être effectué du nœud secondaire source au nœud secondaire cible.

2. Procédé (500) selon la revendication 1, dans lequel le changement de cellule conditionnel comprend un changement de cellule secondaire primaire conditionnel.

3. Procédé (500) selon l'une des revendications 1 et 2, dans lequel la notification comprenant l'indication précisant si le nœud secondaire source doit effectuer un transfert de données anticipé est transmise en utilisant au moins l'un parmi :
une procédure ou un message de modification requise ;
une procédure ou un message d'indication d'adresse ; ou
un nouveau message ou une nouvelle procédure.

4. Procédé (500) selon l'une des revendications 1 à 3, dans lequel la notification liée au changement de cellule conditionnel initié à l'aide du nœud instructeur est transmise au nœud secondaire source lorsque le nœud secondaire source n'est pas configuré avec un transfert de données anticipé.

5. Procédé (500) selon la revendication 4, dans lequel le nœud secondaire source n'est pas configuré avec transfert de données anticipé car le nœud secondaire source n'est pas configuré avec un protocole de convergence de données par paquets.

6. Procédé (500) selon l'une des revendications 1 à 5, comprenant en outre les étapes suivantes :
recevoir par le nœud instructeur une notification du nœud secondaire source liée une configuration de groupe de cellules secondaires à la suite du début de l'exécution par l'équipement utilisateur d'un changement de cellule conditionnel intra-nœud secondaire ;
dans lequel la notification reçue du nœud secondaire source comprend une indication précisant si une configuration de groupe de cellules secondaires doit être transférée du nœud instructeur à l'équipement utilisateur.

7. Procédé (500) selon la revendication 6, dans lequel la notification reçue du nœud secondaire source est reçue avec au moins l'un parmi :
un message ou une procédure de modification requise ; ou
un nouveau message ou une nouvelle procédure.

8. Procédé (500) selon l'une des revendications 6 et 7, comprenant en outre les étapes suivantes :
transférer par le nœud instructeur la configuration de groupe de cellules secondaires à l'équipement utilisateur ou ne pas transférer la configuration de groupe de cellules secondaires à l'équipement utilisateur, sur la base de l'indication précisant si la configuration de groupe de cellules secondaires doit être transférée du nœud instructeur à l'équipement utilisateur.

9. Procédé (500) selon l'une des revendications 6 à 8, dans lequel l'indication précisant si la configuration de groupe de cellules secondaires doit être transférée du nœud instructeur à l'équipement utilisateur comprend la présence ou l'absence d'un paramètre, où la présence du paramètre ayant une première valeur indique au nœud instructeur que la configuration de groupe de cellules secondaires doit être transférée du nœud instructeur à l'équipement utilisateur, et où l'absence du paramètre ou le paramètre ayant une deuxième valeur indique au nœud instructeur que la configuration de groupe de cellules secondaires ne doit pas être transférée du nœud instructeur à l'équipement utilisateur.

10. Procédé (500) selon l'une des revendications 1 à 9, comprenant en outre les étapes suivantes :
indiquer par le nœud instructeur à l'équipement utilisateur une préférence de réinitialiser le changement de cellule conditionnel initié à l'aide du nœud instructeur après le début de l'exécution par l'équipement utilisateur d'un changement de cellule conditionnel intra-nœud secondaire ;
dans lequel sur la base de la préférence, le nœud secondaire source donne l'instruction à l'équipement utilisateur de poursuivre une évaluation de changement de cellule inter-nœud secondaire après le début de l'exécution par l'équipement utilisateur du changement de cellule conditionnel intra-nœud secondaire jusqu'à l'expiration d'un temporisateur ; et
dans lequel, à la suite de la réception de l'instruction de poursuivre, l'équipement utilisateur démarre un temporisateur pour l'exécution du changement de cellule conditionnel intra-nœud secondaire, et l'équipement utilisateur surveille la réception de signalisation pour au moins une commande de modification d'au moins une configuration d'ajout ou de changement de cellule conditionnelle en attente, et en réponse à la non-réception de l'au moins une commande, l'équipement utilisateur libère l'au moins une configuration d'ajout ou de changement de cellule conditionnelle en attente.

11. Nœud instructeur (170-1), comprenant :
au moins un processeur ; et
au moins une mémoire comportant un code de programme informatique ;
dans lequel l'au moins une mémoire et le code de programme informatique sont configurés pour, avec l'au moins un processeur, amener le nœud instructeur à au moins :
transmettre une configuration à un équipement utilisateur (110), la configuration comprenant un changement de cellule conditionnel initié à l'aide du nœud instructeur ; et
transmettre une notification du nœud instructeur à un nœud secondaire source (170-2) en réponse à une préparation du changement de cellule conditionnel, la notification étant liée au changement de cellule conditionnel initié à l'aide du nœud instructeur ;
dans lequel la notification comprend une indication précisant si le nœud secondaire source doit effectuer un transfert de données anticipé du nœud secondaire source à un nœud secondaire cible, dans lequel l'indication précisant si le nœud secondaire source doit effectuer un transfert de données anticipé comprend la présence ou l'absence d'un paramètre, où la présence du paramètre ayant une première valeur indique qu'un transfert de données anticipé doit être effectué du nœud secondaire source au nœud secondaire cible, et où l'absence du paramètre ou le paramètre ayant une deuxième valeur indique qu'un transfert de données anticipé ne doit pas être effectué du nœud secondaire source au nœud secondaire cible.

12. Produit de programme informatique comprenant des instructions de programme qui, lorsque le programme est exécuté par un nœud instructeur (170-1), amènent le nœud instructeur à :
transmettre (502) une configuration à un équipement utilisateur, la configuration comprenant un changement de cellule conditionnel initié à l'aide du nœud instructeur ; et
transmettre (504) une notification du nœud instructeur à un nœud secondaire source en réponse à une préparation du changement de cellule conditionnel, la notification étant liée au changement de cellule conditionnel initié à l'aide du nœud instructeur ;
dans lequel (506) la notification comprend une indication précisant si le nœud secondaire source doit effectuer un transfert de données anticipé du nœud secondaire source à un nœud secondaire cible, dans lequel l'indication précisant si le nœud secondaire source doit effectuer un transfert de données anticipé comprend la présence ou l'absence d'un paramètre, où la présence du paramètre ayant une première valeur indique qu'un transfert de données anticipé doit être effectué du nœud secondaire source au nœud secondaire cible, et où l'absence du paramètre ou le paramètre ayant une deuxième valeur indique qu'un transfert de données anticipé ne doit pas être effectué du nœud secondaire source au nœud secondaire cible.
